# EUROPÄISCHE PATENTSCHRIFT

(11) **EP 2 048 515 B1**
(45) Veröffentlichungstag und Bekanntmachung des Hinweises auf die Patenterteilung: **01.08.2012**
(21) Anmeldenummer: 07403002.4
(22) Anmeldetag: 11.10.2007
(51) Int. Cl.: G01S 13/91, G01S 13/92, G08G 1/017, G08G 1/054

(54) **Verfahren zur Erfassung und Dokumentation von Verkehrsverstössen an einer Verkehrsampel**
Method for determining and documenting traffic violations at a traffic light
Procédé pour déterminer et documenter des infractions à un feux de signalisation

(43) Veröffentlichungstag der Anmeldung: 15.04.2009
(73) Patentinhaber: JENOPTIK Robot GmbH, 40789 Monheim am Rhein (DE)
(72) Erfinder: Behrens, Andreas, 40764 Langenfeld (DE); Dohmann, Bernhard, 40764 Langenfeld (DE); Terlau, Norbert, 51515 Kürten (DE)
(74) Vertreter: Schaller, Renate

(56) Entgegenhaltungen:
- EP-A- 1 662 272
- WO-A-00/31969
- US-A1- 2006 055 560

## Beschreibung

Die Erfindung betrifft ein Verfahren zur Überwachung eines Verkehrsraumes (Beobachtungsraumes) zwecks Erfassung von Verkehrsverstößen, wie sie gattungsgemäß aus der europäischen Patentanmeldung EP 1 662 272 A1 bekannt ist. Solche Anordnungen können sowohl zur Feststellung eines Rotlichtverstoßes, eines Geschwindigkeitsverstoßes als auch eines kombinierten Rotlicht-Geschwindigkeitsverstoßes eingesetzt werden.

Generell unterscheiden sich die bekannten Verfahren zur Überwachung von Verkehrsräumen durch die Verwendung unterschiedlicher Arten von Sensoren, die entweder in den Fahrbahnbelag eingebettet werden oder oberhalb des Fahrbahnbelages angeordnet sind. Die in den Fahrbahnbelag eingebetteten Sensoren erfordern einen hohen Installationsaufwand und müssen entsprechend dem Verschleiß des Fahrbahnbelages von Zeit zu Zeit ausgetauscht werden.

Anstatt in jede einzelne Fahrbahn an einem vorbestimmten Ort einen Sensor einzubetten, wird gemäß der EP 1 662 272 A1 auf einen Beobachtungsort begrenzt, jeweils von einer Radarantenne kommend, eine Radarstrahlung geringer Strahlaufweitung gerichtet, um Fahrzeuge beim Passieren des Beobachtungsortes zu erfassen. Die Erfassung kann genutzt werden, um eine Rotlicht-Kamera zu aktivieren, die Fahrzeuggeschwindigkeit zu erfassen oder die Verkehrsdichte zu messen.

Aus dem Wissen der Entfernung des Beobachtungsortes zum Sende- und Empfangsort der Radarstrahlung, im Vergleich mit der aus den reflektierten Signalen abgeleiteten Entfernung, kann auf einfache Weise bestimmt werden, wann ein Fahrzeug den Beobachtungsort passiert, um ein Aktivierungssignal zu generieren. Um eine unkorrekte Erfassung zu vermeiden wird vorgeschlagen, aus einer Vielzahl von reflektierten Signalen eine Serie von Entfernungen abzuleiten und die Erfassung des Fahrzeuges am Beobachtungsort nur dann als gültig zu betrachten, wenn die Entfernungswerte miteinander korrespondieren.

Der Empfang einer Vielzahl von Reflektionssignalen setzt voraus, dass der Beobachtungsort kein Punkt ist, den ein Fahrzeug passiert sondern ein ausgedehnter Raum, der durch eine Vielzahl von Entfernungen, die gemeinsam in einem Entfernungsbereich liegen, beschrieben wird. Aus Sicht der Anmelderin wäre es daher zutreffender, für den Begriff Beobachtungsort den Begriff Beobachtungsraum zu wählen, wie er für die Beschreibung der Erfindung nachfolgend auch Verwendung findet.

Da gemäß der EP 1 662 272 A1 die Radarstrahlung auf einen innerhalb einer Fahrspur begrenzten Beobachtungsraum begrenzt gerichtet wird, ist jede erfasste Entfernung der betreffenden Fahrspur zuzuordnen, womit das angemessene Fahrzeug eindeutig identifiziert ist.

Wie aus den Zeichnungen der EP 1 662 272 A1 zu entnehmen ist, ist für eine Anwendung des Verfahrens zur Erfassung eines Rotlichtverstoßes der Beobachtungsraum auf einen Entfernungsbereich von beispielhaft 2 m begrenzt und schließt die Haltelinie ein.

Indem wie vorgeschlagen bei Erfassung eines Fahrzeuges im Beobachtungsraum ein Aktivierungssignal erzeugt wird, welches eine mit einer Verkehrsampel gekoppelte Kamera auslöst, wird sichergestellt, dass eine Aufnahme erstellt wird, wenn ein Fahrzeug innerhalb einer bestimmten Schaltphase der Verkehrsampel, z. B. nur der Rotphase, den Beobachtungsraum und damit die Haltelinie passiert.

Die Vorschriften für eine Beweisführung von Verkehrsverstößen sind national unterschiedlich. So gibt es auch Staaten, in denen ein erstes Foto zum Beweis eines Rotlichtverstoßes bereits einige Meter vor der Haltlinie verlangt wird.

Dem Fachmann läge es gegebenenfalls nahe, den Beobachtungsraum entsprechend vor der Haltelinie festzulegen. Nachteilig an einer solchen Lösung wäre jedoch, dass ein Fahrzeug auch dann aufgenommen wird, wenn es noch vor der Haltelinie zum Stehen kommt.

Nachteilig an einem Verfahren gemäß der EP 662 272 A1 ist außerdem, dass für die Erfassung von Verkehrsverstößen für jede Fahrspur eine Radarantenne benötigt wird und zusätzlich jede Radarantenne einzeln ausgerichtet werden muss. Der Investitionsaufwand für die zu überwachenden Verkehrsräume steigt mit der Anzahl der zu überwachenden Fahrbahnen.

Aus der WO 00/31969 A1 ist eine Anordnung zur vorherigen Erkennung und Aufzeichnung von Rotlicht-Verstößen in einem Ampelbereich bekannt.

Die Anordnung umfasst pro Fahrspur wenigstens zwei Kameras, von denen wenigstens die auf einen entfernteren Objektbereich eingestellte Kamera eine Videokamera ist. Aus den von einem auf sie zukommenden Fahrzeug aufgenommenen Videosequenzen lässt sich die Fahrgeschwindigkeit des Fahrzeuges ableiten und damit eine Vorhersage treffen, ob das Fahrzeug während der Rotphase einer seiner Fahrspur zugeordneten Ampel in den Kreuzungsbereich einfährt. Gegebenenfalls werden mit einer zweiten Kamera Fotos erstellt, wenn sich das Fahrzeug anschließend an vorbestimmten Fotofixpunkten befindet.

Der Erfindung liegt die Aufgabe zu Grunde, ein verbessertes Verfahren zu finden, mit dem mit nur einer Radarantenne mehrere Fahrspuren einer Fahrbahn auf Verkehrsverstöße, nämlich Rotlichtverstöße und Geschwindigkeitsverstöße überwacht werden können und vermeintliche Rotlichtverstöße mit einer höheren Treffsicherheit bereits vor der Haltelinie erfasst werden.

Diese Aufgabe wird mit einem Verfahren gemäß Anspruch 1 gelöst.

Vorteilhafte Ausführungen sind in den Unteransprüchen beschrieben.

Es ist erfindungswesentlich, dass eine Radarstrahlung über bzw. auf alle interessierenden Fahrspuren einer Fahrbahn gerichtet wird und den Auftreffpunkten innerhalb eines Beobachtungsraumes ihre Position zur Radarantenne, deren Abstand zu einer Haltelinie und die Geschwindigkeit des Fahrzeuges zum Zeitpunkt des Auftreffens der Radarstrahlung zugeordnet wird.

Der Beobachtungsraum liegt in Fahrtrichtung vollständig vor der Haltelinie oder kann diese einschließen.

Aus Radarsignalen von Auftreffpunkten vor der Haltelinie kann über das Weg-Zeit-Gesetz aus der Geschwindigkeit und dem senkrechten Abstand zur Haltelinie prognostiziert werden, ob das Fahrzeug die Haltelinie passieren wird und gegebenenfalls ein Signal ausgelöst wird, um von dem Fahrzeug sofort, nach einer zeitlichen Verzögerung oder an einem Fixpunkt bezogen zur Haltelinie eine Aufnahme zu erstellen.

Bei Auftreffpunkten in einem Abstand von Null bis kleiner einer Fahrzeuglänge, ist gesichert, dass das Fahrzeug die Haltelinie passiert und das Signal kann sofort ausgelöst werden, ohne dass eine Prognose erstellt wird.

Zur Dokumentation eines Rotlichtverstoßes wird nur dann ein Signal zum Auslösen einer Kamera erzeugt, wenn ein Verstoß als gesichert gilt oder die Prognose ergibt, dass das Fahrzeug die Haltelinie während einer vorgegebenen Schaltphase überfährt.

Je nach Ausrichtung der Radarstrahlung und Öffnungswinkel der Radarkeule sowie Ausdehnung des Beobachtungsraumes kann die Position eines Auftreffpunktes nur durch eine Entfernung oder durch eine Entfernung und einen Winkel hinreichend genau definiert sein.

Es ist dem Fachmann klar, dass es sich bei dem genannten Auftreffpunkt nicht wirklich um eine auf einen Punkt reduzierte Fläche handelt, auf die die Radarstrahlung auftrifft, sondern korrekterweise um alle Flächen eines Fahrzeuges, die mit der Radarstrahlung beaufschlagt werden und die Radarstrahlung mehr oder weniger auf die Radarantenne reflektieren.

Im Interesse einer einfachen Darstellung der Erfindung, die nicht die Ableitung der Geschwindigkeit, der Entfernung oder des Winkels der angemessenen Reflexionsfläche zum Gegenstand hat, soll vereinfacht jeweils von einem Auftreffpunkt gesprochen werden, dem eine Geschwindigkeit, eine Entfernung und ein Winkel zugeordnet werden kann.

Verschiedene Verfahren und dazu geeignete Vorrichtungen zum Ableiten der genannten Parameter aus den Radarsignalen sind aus dem Stand der Technik bekannt, wie z. B. die in der DE 10 2004 040 015 B4 beschriebene Planarantenne mit zwei getrennten Empfangsflächen.

In Abhängigkeit von der Geschwindigkeit des angemessenen Fahrzeuges und der Ausdehnung des Beobachtungsraumes in Fahrtrichtung werden eine Anzahl von Auftreffpunkten angemessen und aus den Radarsignalen die genannten Parameter abgeleitet. Die Vielfachmessung erlaubt einerseits eine Verifizierung bereits abgeleiteter Messwerte, aber auch die Verfolgung der Spur, die das Fahrzeug auf der Fahrbahn beschreibt.

Jeder Auftreffpunkt ist über seine ableitbare Position einer Fahrspur und damit der Haltelinie auf dieser Fahrspur zugeordnet.

Die Haltelinien, die grundsätzlich senkrecht zum Fahrbahnrand verlaufen, können in einer Flucht über die gesamte Breite der Fahrbahn verlaufen, aber auch über die einzelnen Fahrspuren zueinander versetzt sein, um zum Beispiel Fahrzeuge auf Abbiegerspuren in einer anderen Entfernung vor der Verkehrsampel zum Halten zu veranlassen.

Außerdem können Verstöße für unterschiedliche Schaltphasen der Ampelanlage fahrspurenselektiv erfasst werden.

Das Verfahren erlaubt nicht nur die Erfassung von Rotlichtverstößen, sondern auch die Erfassung von Geschwindigkeitsverstößen. Hierbei können auch unterschiedliche Geschwindigkeitsbeschränkungen fahrspurselektiv überwacht werden.

Eine Vorrichtung zur Durchführung des Verfahrens kann so programmiert sein, dass sie beide Arten von Verstößen erfasst oder nur eine Art. Wenn zum Beispiel die Verkehrsampel in verkehrsarmen Zeiten ausgeschaltet wird, kann die Vorrichtung weiter arbeiten und nur Geschwindigkeitsverstöße erfassen.

Das erfindungsgemäße Verfahren ermöglicht für Fahrzeuge, die auf unterschiedlichen Fahrspuren einer Fahrbahn fahren, mit nur einer Vorrichtung an einem Standort Rotlichtverstöße und/oder Geschwindigkeitsverstöße zu erfassen.

Die Erfindung soll nachfolgend anhand von Ausführungsbeispielen an Zeichnungen näher erläutert werden.

Hierzu zeigen:
- Fig.1: ein erstes Ausführungsbeispiel, bei dem der abfließende Verkehr mit einer überwiegend quer zur Fahrbahnrichtung ausgerichteten Radarkeule erfasst wird
- Fig. 2: ein zweites Ausführungsbeispiel, bei dem der zufließende Verkehr mit einer überwiegend quer zur Fahrbahnrichtung ausgerichteten Radarkeule erfasst wird
- Fig.: 3 ein drittes Ausführungsbeispiel, bei dem der zufließende Verkehr mit einer überwiegend längs zur Fahrbahnrichtung ausgerichteten Radarkeule erfasst wird
- Fig. 4: ein viertes Ausführungsbeispiel, bei dem der abfließende Verkehr mit einer überwiegend längs zur Fahrbahnrichtung ausgerichteten Radarkeule erfasst wird

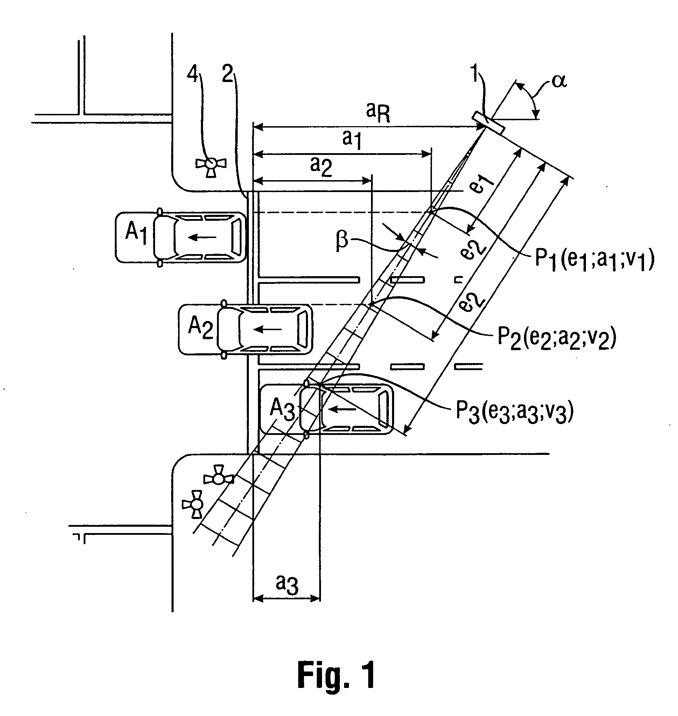

In einem ersten Ausführungsbeispiel, dargestellt in Fig. 1, soll das Verfahren mit einer Radarantenne eines Radargerätes 1 durchgeführt werden, dass eine schmale Radarkeule mit einem Öffnungswinkel β von kleiner 10°, insbesondere 5°, im Wesentlichen quer zur Fahrbahnrichtung, nämlich in einem Aufstellwinkel α von ca. 60° zur Fahrbahnrichtung über alle drei Fahrspuren einer Fahrbahn richtet.
Die Fahrzeuge fahren beim Durchfahren der Radarkeule vom Radargerät 1 weg.

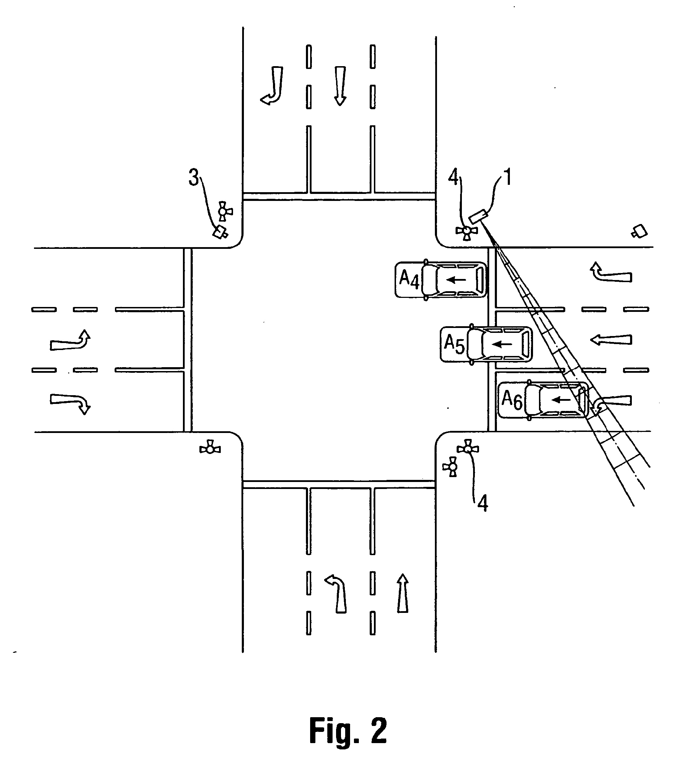

Ein in Fig. 2 dargestelltes Ausführungsbeispiel unterscheidet sich zu dem ersten nur dadurch, dass die Fahrzeuge beim Durchfahren der Radarkeule auf das Radargerät 1 zufahren. Dieser Unterschied hat im Wesentlichen nur Auswirkungen auf den Aufstellort einer Aufnahmeeinheit, mit der ein erfasster Verstoß durch eine Aufnahme dokumentiert wird.

Im ersten Ausführungsbeispiel ist der Beobachtungsraum durch die Randstrahlen der Radarkeule und die beidseitigen Fahrbahnbegrenzungen begrenzt und liegt vor einer Haltelinie 2.

Aufgrund des geringen Öffnungswinkels β der Radarkeule kann die Position eines Auftreffpunktes P hinreichend genau durch den Aufstellwinkel α und die abgeleitete Entfernung e bestimmt werden, die vereinfacht als Entfernung eines Auftreffpunktes P auf der Radarachse dargestellt wird.

Fahrzeuge, die mit der dem Radargerät 1 zugewandten Seite erfasst werden, werden mit einer Entfernung erfasst, die eindeutig nur einer Fahrspur zugeordnet werden kann. Ausgenommen sind Entfernungen, die gleich oder nahe einer Fahrspurtrennlinie liegen.

Jeder abgeleiteten Entfernung e, in Fig. 1 wurden beispielhaft für die Fahrzeuge A1, A2 und A3 die Entfernungen e1, e2 und e3 angegeben, kann ein senkrechter Abstand, hier a1, a2 und a3 zu einer Haltelinie 2 zugeordnet werden. Die Haltelinien 2 der drei Fahrspuren sind fluchtend zueinander in einem Abstand a_{R} senkrecht zum Fahrbahnrand auf der Fahrbahn aufgetragen.

Um den einzelnen Auftreffpunkten P jeweils einem Abstand a zuordnen zu können, muss die genaue Lage der Haltelinie 2 zum Aufstellort der Radarantenne des Radargerätes 1 und deren Aufstellwinkel ermittelt werden und einer mit dem Radargerät 1 in Verbindung stehenden Recheneinheit zur Verfügung gestellt werden.

Bei einer Haltelinie 2, die grundsätzlich senkrecht zum Fahrbahnrand verläuft, ist die Lage der Haltelinie 2 bereits durch deren senkrechten Abstand a_{R} zum Radargerät 1 definiert. Ein Abstand a ergibt sich dann für einen Auftreffpunkt P als Differenz zwischen dem festen Abstand a_{R} und dem Produkt aus einer Entfernung e und dem Sinus von 90° minus dem festen Aufstellwinkel α, das heißt z. B. für das Fahrzeug A1 ergibt sich der Abstand a1 = a_{R} - e1 x sin(90° - α).

Um erfindungsgemäß zu prognostizieren, ob ein angemessenes Fahrzeug, z. B. das Fahrzeug A1, dessen Durchfahrt den Auftreffpunkt P1 bewirkt, die Haltelinie 2 auch tatsächlich überfährt, wird neben dessen Entfernung e1 auch dessen Geschwindigkeit v1 aus den Radarsignalen abgeleitet und dem Auftreffpunkt P1 zugeordnet.

Anhand des Weg-Zeit-Gesetzes wird anschließend aus dem Abstand a1 und der Geschwindigkeit v1 für den Auftreffpunkt P1 prognostiziert, ob das Fahrzeug noch vor der Haltelinie 2 zum Halten kommt oder diese überfährt.

Gleichzeitig kann die ermittelte Geschwindigkeit v1 mit einer der Fahrspur zugeordneten Grenzgeschwindigkeit verglichen werden, um gegebenenfalls auch einen Geschwindigkeitsverstoß ahnden zu können.

Das Radargerät 1 ist an eine Ampelanlage angeschlossen. Mit dem Start einer Rotzeit (optional zusätzlich auch die Gelbzeit) wird die Anordnung und damit die Überwachung aktiviert, so dass ein die Radarkeule durchfahrendes Fahrzeug detektiert werden kann.

Zur Ermittlung der Fahrzeuggeschwindigkeit nach dem Doppler-Prinzip wäre ein Aufstellwinkel von ca. 20° optimal. Mit zunehmend größer werdendem Winkel werden die Messergebnisse zur Ermittlung der Fahrzeuggeschwindigkeit ungenauer und werden gegen 90° unbrauchbar. Dagegen wäre für die Prognose, ob ein Rotlicht-Verstoß wahrscheinlich ist, ein Aufstellwinkel von 85° - 87,5° optimal, da dann für alle Fahrspuren der Abstand für Auftreffpunkten P im Beobachtungsraum, der maximal der Radarkeule entsprechen kann, zur Haltelinie 2 annähernd gleich ist. Je größer der Abstand der Radarkeule und damit des Beobachtungsraumes von der Haltelinie 2 ist, umso größer wird die Möglichkeit, dass ein Fahrzeug nach dem Verlassen der Radarkeule spontan beschleunigen oder bremsen kann und somit die Ereignisdetektion zu einer annullierten Messung führen wird.

Als ein guter Kompromiss hat sich ein Aufstellwinkelbereich von 45° bis 75° erwiesen.

Besondere Bedeutung kommt dem Öffnungswinkel β der Radarkeule zu, da mit steigendem Öffnungswinkel die Bestimmung der Entfernung unschärfer wird.

Durch die Ermittlung der Entfernung e des Auftreffpunktes P auf dem angemessenen Fahrzeug A zur Radarantenne kann auf die Position des Fahrzeugs A geschlossen werden, das heißt es kann festgestellt werden, auf welcher Fahrspur sich das Fahrzeug A einer Haltelinie 2 nähert. Somit kann fahrspurselektiv ein Verkehrsverstoß vorausgesagt werden, insbesondere wenn für die unterschiedlichen Fahrspuren unterschiedliche Ampelphasen, z. B. Rechtsabbieger, geschaltet werden. Ein Verkehrsverstoß liegt vor, wenn die ermittelte Geschwindigkeit höher als eine für die jeweilige Fahrspur festgelegte Grenzgeschwindigkeit ist und/oder, wenn ein Fahrzeug während einer Rotlichtphase die Haltelinie 2 überfährt.

Eine Übertretung der zulässigen Grenzgeschwindigkeit wird mittels des Dopplereffektes von dem Radargerät 1 ermittelt und in einer fotografischen Aufzeichnung dokumentiert. Für die Identifikation des Fahrers ist dabei eine Frontfotografie notwendig. Dafür wird die fotografische Aufzeichnung bei Geschwindigkeitsverstößen im ankommenden Verkehr beim Eintritt eines Fahrzeuges A in die Radarkeule ausgelöst und die relevanten Daten werden nach Abschluss der Messung nachträglich in die Aufzeichnung des Verkehrsverstoßes eingeblendet.

Ein Rotlichtverstoß wird anhand einer Aufzeichnung dokumentiert, die ausgelöst wird, wenn ein Fahrzeug A sich außerhalb einer der für diese Fahrspur zugeordneten Grünphase einer Haltelinie 2 nähert und die Fahrzeuggeschwindigkeit einen Rotlicht-Verstoß wahrscheinlich macht.

Für den Installationsort des Radargerätes 1 ist in Fahrtrichtung betrachtet sowohl die rechte Fahrbahnseite als auch die linke Fahrbahnseite geeignet. Der notwendige Installations-Bauraum ist in den meisten Fällen auf der rechten Fahrbahnseite vorhanden. Die linke Fahrbahnseite ist dann besonders günstig, den notwendigen Bauraum vorausgesetzt, wenn auf dem linken Fahrstreifen aufgrund weniger vorkommender großer Fahrzeuge die Gefahr von Abschattungen geringer ist.

Die Zuordnung des Abstandes a der Haltelinie 2 zu einem Auftreffpunkt P ermöglicht nicht nur eine Prognose ob die Haltelinie 2 überfahren wird, sondern ermöglicht auch das Auslösen einer Kamera, unabhängig von der Fahrzeuggeschwindigkeit, in Abhängigkeit von wählbaren Abständen des Fahrzeuges A von der Haltelinie 2 zu bewirken.

So kann ein Fotofixpunkt z. B. exakt 10 m vor, direkt auf und 2 m hinter der Haltelinie 2 liegen. Ein zweites Beweisfoto wird üblicherweise nach einer vorgegebenen Intervallzeit ausgelöst, um das Fahrzeug A nach dem Überfahren der Haltelinie 2 zu erfassen.

Im Unterschied zum Stand der Technik kann auch ein zweites und wenn gewünscht auch weitere Beweisfotos unabhängig von Zeitgröße, rein positionsbezogen, an Fixpunkten bezogen auf die Haltelinie 2 ausgelöst werden.

Über den Ort des Fotofixpunktes hinaus kann der Anwender in Abhängigkeit vom Aufstellort der Aufnahmeeinheit und damit der Kamera wählen, ob die Fahrzeugfront oder das Heck in der vorgegebenen Position erscheinen soll. Diese Option erlaubt eine optimale Lesbarkeit der Kennzeichen und zwar sowohl bei Verwendung der Anlage zur Frontal- als auch zur Heckfotografie.

Die Bestimmung von Fotofixpunkten in Abhängigkeit vom Abstand zur Haltelinie 2 und nicht nur vor der Haltelinie 2 setzt voraus, dass der Beobachtungsraum die Haltelinie 2 mit einschließt, was bei dem beschriebenen ersten und auch bei dem zweiten Ausführungsbeispiel nicht der Fall ist.

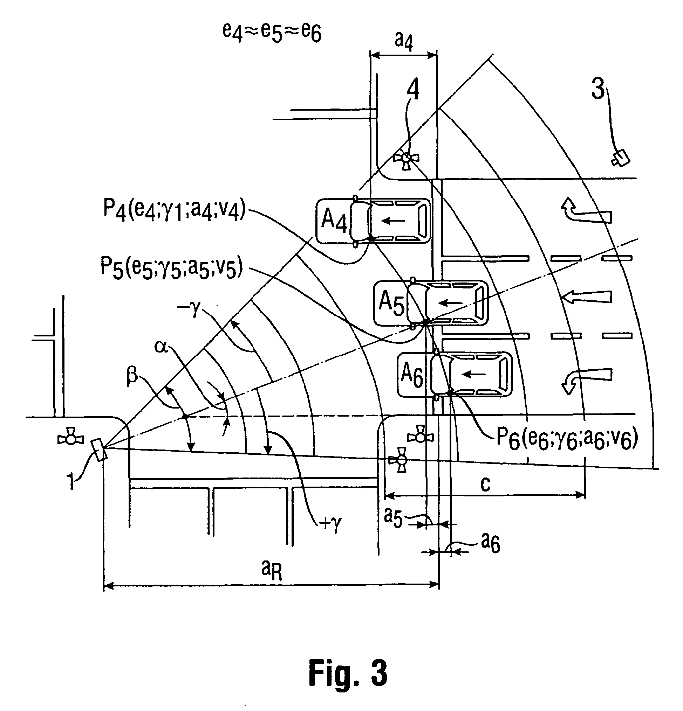

In einem dritten Ausführungsbeispiel, dargestellt in Fig. 3, soll die Radarstrahlung im Wesentlichen längs zur Fahrbahnrichtung ausgesendet werden. Dazu wird ein Radargerät 1 so positioniert, dass es Radarstrahlung mit einem großen Öffnungswinkel, z. B. einem Öffnungswinkel β von 20 bis 40°, unter einem Aufstellwinkel α der Radarachse zur Fahrbahnrichtung von kleiner 45 auf eine Fahrbahn mit mehreren Fahrspuren aussendet. Die Fahrzeuge kommen beim Durchqueren der Radarkeule auf das Radargerät 1 zu.

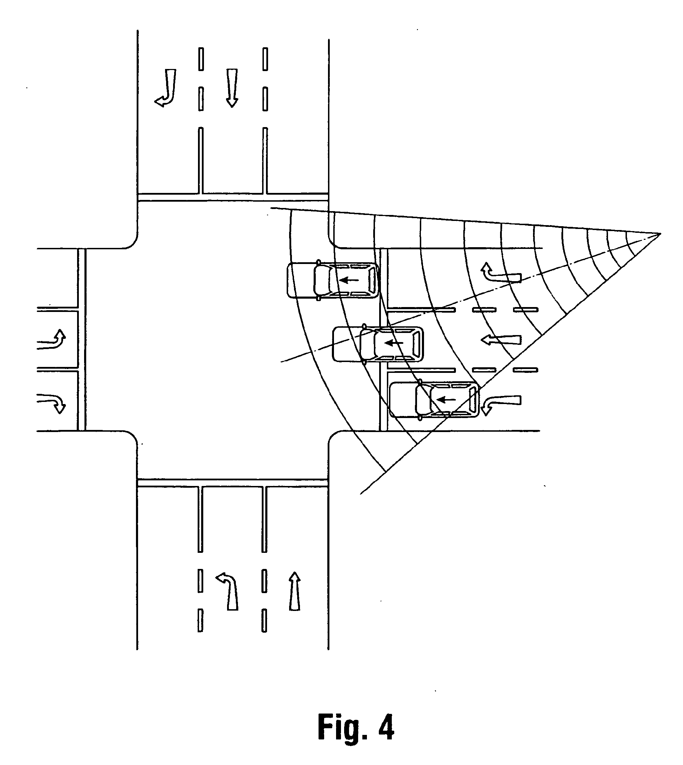

Ein viertes Ausführungsbeispiel, dargestellt in Fig. 4, unterscheidet sich zu dem dritten dadurch, dass die Fahrzeuge beim Durchqueren der Radarkeule vom Radargerät 1 wegfahren.

Insbesondere aufgrund des kleinen Aufstellwinkels α ist eine hinreichend genaue Ermittlung der Position eines Auftreffpunktes P allein anhand der Entfernung nicht mehr möglich, da eine abgeleitete Entfernung nicht nur einer Fahrbahn zugeordnet werden kann, weshalb zusätzlich zur Entfernung auch der Winkel zur Achse der Radarantenne des Radargerätes 1 aus den Radarsignalen abgeleitet und einem Auftreffpunkt zugeordnet wird.

Wie in Fig. 3 gezeigt, befinden sich die Fahrzeuge A4, A5 und A6 nahezu in gleichen Entfernungen zum Radargerät 1. Als abgeleitete Entfernung wurde hier die Entfernung e der linken oberen Ecke der Frontscheibe angenommen, die als e4, e5 und e6 nahezu gleich sind.

Um die Position der Auftreffpunkte hinreichend genau zu bestimmen, werden die Messwinkel y ermittelt, die sich für die Auftreffpunkte P4, P5 und P6 deutlich als γ4 = -20°, γ5 = 0° und γ6 = +20° unterscheiden.

Durch den großen Öffnungswinkel β der Radarkeule kann im Vergleich zu den beiden ersten Ausführungsbeispielen ein größerer Abschnitt eines Verkehrsraumes überwacht werden und somit für jedes Fahrzeug innerhalb der Radarkeule wiederholt Messvorgänge durchgeführt werden. Die erhaltenen Wertetripel aus Geschwindigkeit, Entfernung und Winkel werden zu einem Track zusammengefasst und kontinuierlich auf Plausibilität (Tracking) geprüft, indem Istwerte mit Sollwerten verglichen werden. Die Sollwerte ergeben sich aus der Annahme, dass ein Fahrzeug nur in begrenztem Maße Richtungsänderungen vornimmt und auch nur in bestimmten Grenzen beschleunigt bzw. verzögert. Im Gegensatz zu einer Geschwindigkeitsmessung führen Beschleunigungs- bzw. Verzögerungsvorgänge während des Messvorganges nicht zur Annullierung eines Rotlichtverstoßes, da dieser nicht von der Messung abhängt, sondern lediglich durch die Messung die Aufzeichnung ausgelöst wird, die den Rotlichtverstoß dokumentiert.

Für den Installationsort des Radargerätes 1 ist sowohl die rückwärtige Position, Fig. 4, bei der die Radarkeule längs von hinten auf die Fahrzeuge gerichtet ist als auch eine Position, bei der die Radarkeule längs von vorne auf die Fahrzeuge gerichtet ist, gezeigt in Fig. 3, insbesondere von der gegenüberliegenden Kreuzungsseite, geeignet.

Bei einer Anordnung auf der rechten bzw. auf der linken Fahrbahnseite ist der notwendige Installations-Bauraum zu berücksichtigen, der in den meisten Fällen auf der rechten Fahrbahnseite vorhanden ist. Die linke Fahrbahnseite ist dann besonders günstig, wenn dort eine Verkehrsinsel vorhanden ist, und auf der linken Fahrspur aufgrund weniger vorkommender großer Fahrzeuge die Gefahr von Abschattungen geringer ist.

Eine Aufzeichnungseinheit 3, die aus mindestens einer Kamera besteht, kann in Abhängigkeit vom Ort des Fotofixpunktes im Gehäuse des Radargerätes 1 als auch in einem separaten abgesetzten Gehäuse angeordnet werden.

In dem dritten Ausführungsbeispiel ist der Beobachtungsraum innerhalb der Radarkeule auf einen ausgewählten Entfernungsbereich c begrenzt, der auch die Haltelinie 2 einschließt. Nur wenn Entfernungswerte aus den Radarsignalen abgeleitet werden, die innerhalb des Entfernungsbereiches liegen, wird auch ein Abstand zur Haltelinie 2 ermittelt. Dadurch wird insbesondere auf eine Signalverarbeitung verzichtet, wenn die Fahrzeuge außerhalb des Tiefenschärfebereiches einer Kamera der Aufnahmeeinheit kommen.

Für Entfernungswerte, die Auftreffpunkten P vor der Haltelinie 2 zugeordnet werden können, kann über die ebenfalls abgeleitete Geschwindigkeit eine Prognose erstellt werden, ob das Fahrzeug A über die Haltelinie 2 fährt, um im Falle des Zutreffens noch vor der Haltelinie 2 ein Foto auszulösen.

Zusätzlich können im Wissen um den jeweiligen Abstand des Auftreffpunktes P und damit des Fahrzeuges A von der Haltelinie 2 Fotos ausgelöst werden, wenn sich das Fahrzeug A in bestimmten wählbaren Abständen vor, auf oder hinter der Haltelinie 2 befindet.

Die beiden in den aufgezeigten zwei Ausführungsbeispielen grundsätzlich unterschiedlichen Anordnungen des Radargerätes 1 haben auf die Durchführung des Verfahrens nur geringe Unterschiede.

Bei dem zweiten Ausführungsbeispiel besteht die Möglichkeit, das Radargerät 1 und die Aufzeichnungseinheit 3 in einem gemeinsamen Gehäuse zu positionieren. Weiterhin ist auf Grund des Tracking der Fehler der Schätzung, die die Aufzeichnung auslöst, deutlich kleiner. Zusätzlich treten weniger Abschattungen durch große Fahrzeuge, z. B. Busse auf, da die Radarstrahlen längs in die Fahrstreifen gerichtet sind.

Die Radarstrahlung kann auch von einem Radargerät, welches oberhalb der Fahrbahn z. B. an einer Brücke montiert ist, in Fahrbahnrichtung vertikal um einen spitzen Winkel auf die Fahrbahn gerichtet werden, was im Wesentlichen dem zweiten Ausführungsbeispiel entsprechen würde, jedoch praktisch aufgrund der Mehranforderungen zur Montage des Radargerätes eher weniger gefragt sein wird.

Bekanntermaßen wird mit einem Dauerradargerät eine in Amplitude und Frequenz konstante Dauerradarstrahlung ausgesendet. Bei der Reflexion an einem bewegten Objekt, sprich einem Fahrzeug, erfährt diese Radarstrahlung eine in Abhängigkeit von der Geschwindigkeit des Fahrzeuges abhängige Frequenzverschiebung. Der auf die Radarantenne des Radargerätes 1 zurückreflektierte Strahlungsanteil wird mit der ausgesendeten Radarstrahlung verglichen und eine Frequenzdifferenz, die so genannte Dopplerfrequenz gebildet, die zu der Geschwindigkeit des Fahrzeuges proportional ist.

Mit der Ausstrahlung einer Radarstrahlung in zwei verschiedenen Frequenzen erhält man zwei frequenzverschobene Reflektionsstrahlungen, aus deren Phasendifferenz die Entfernung abgeleitet wird. Die Geschwindigkeit und die Entfernung werden somit über einen gemeinsamen Messvorgang ermittelt, womit eine eineindeutige Zuordnung der Messwerte zueinander gesichert ist.

Im Unterschied zur Geschwindigkeitsmessung, die mit dem Doppler-Radar-Prinzip sehr genau gemessen werden kann, ist die Schwankungsbreite der Entfernungsmesswerte groß, da die Radarstrahlung, nicht wie vereinfacht dargestellt, in einem Auftreffpunkt reflektiert wird, sondern die Reflexionen, die von einem Fahrzeug zur Radarantenne gelangen, erstrecken sich auf die gesamte Fahrzeugkontur, auf die der Radarquerschnitt projiziert wird. Der auf ein durch die Radarkeule fahrendes Fahrzeug projizierte Radarquerschnitt ändert sich in Abhängigkeit von der jeweiligen Geometrie des Fahrzeuges sowie seiner Position in der Radarkeule, beginnend vom Eintritt in die bis hin zum Austritt aus der Radarkeule. Durch den Empfänger wird zu jedem Messzeitpunkt eine Summe von Messwerten (Messwertschar) aus Partialreflexionen detektiert. Statistisch wird diese Summe zusammen mit anderen parasitär wirkenden Reflektoren, wie Leitplanken oder Metallzäunen im Regelfall als Rayleigh-Verteilung empfangen. Es werden Entfernungen gemessen, welche um ein Vielfaches der Geschwindigkeitsmessung streuen.

Ideal für die Positionsbestimmung ist ein punktförmiger Strahl, wie ihn ein Laserstrahl aufweist. Mit den stark gebündelten kohärenten Lichtstrahlen eines Lasers, vorzugsweise im nicht sichtbaren infraroten Spektralbereich, können Entfernungen sehr präzise nach dem Impulslaufzeit-Prinzip ermittelt werden.

Für ein erfindungsgemäßes Verfahren bietet sich daher an, die Entfernung mit einem Laserentfernungsmesser, anstatt über die Phasenverschiebung an den Frequenzsprüngen der Radarstrahlung, zu ermitteln oder den Laser zusätzlich zur Verifikation des Entfernungswertes, der über die Radarstrahlung ermittelt wurde, einzusetzen.

Die Verifikation des Entfernungswertes des Radargerätes 1 hat den Vorteil, dass der Entfernungswert nicht nur gemeinsam mit der Geschwindigkeit in einem Messvorgang ermittelt wurde, sondern auch durch einen zweiten Beweis mit einem von dem Radargerät 1 unabhängigen Verfahren verifiziert wird.

Für die Aufzeichnungseinheit 3, die aus mindestens einer Kamera besteht, bestehen eine Vielzahl von Ausführungsmöglichkeiten, auf die im Folgenden eingegangen werden soll. Für die Verwertbarkeit der fotografischen Aufzeichnung wird die Erkennbarkeit des Kennzeichens und der Rotphase der Lichtzeichenanlage gefordert. Mit dem Kennzeichen kann der Halter des Fahrzeuges ermittelt werden. Entsprechend den nationalen Anforderungen am Aufstellort wird unterschieden in Front- und Heckfotografie. Bei der Frontfotografie geht es in der Regel um die zusätzliche Identifikation des Fahrers. Für die Frontfotografie kann ein zusätzliches Leuchtsignal notwendig sein, das die Rotphase der Lichtzeichenanlage derart darstellt, dass sie später auf der fotografischen Aufzeichnung gerichtsverwertbar erkennbar ist. Auch Kombination von Front- und Heckfotografie sind möglich, um die Beweiskraft zu erhöhen.

Es kann am rechten und/oder am linken Fahrbahnrand eine Kamera positioniert sein, um für alle Fahrstreifen gerichtsverwertbare Bilder am Fotofixpunkt aufnehmen zu können, die das Fahrzeug, wenn erforderlich die Fahrzeugfarbe, das Kennzeichen und bei Frontfotografie den Fahrer eindeutig erkennbar darstellen.

In der Regel werden Einzelbildkameras eingesetzt, die nach der Auslösung zwei Bilder in Folge erfassen. Im ersten Bild wird das Fahrzeug bei erkennbarem Rotlicht vor dem Haltebalken erfasst und im zweiten Bild nach dem überfahrenen Haltebalken. Aber auch Sequenzkameras, die eine Serie von Einzelbildern, z. B. 16 Stück erfassen, können allein oder in Kombination mit Einzelbildkameras zum Einsatz kommen. Durch die Serie von Einzelbildern wird eine Sequenz einer Verkehrsszene verwertbar aufgezeichnet. Aber auch Videokameras können allein oder in Kombination mit Einzelbildkameras zum Einsatz kommen und eine Sequenz einer Verkehrsszene verwertbar aufzeichnen.

### Aufstellung der verwendeten Bezugszeichen

- 1: Radargerät
- 2: Haltelinie
- 3: Aufzeichnungseinheit
- 4: Verkehrsampel
- A: ein Fahrzeug
- e: eine Entfernung eines Auftreffpunktes von der Radarantenne
- a: ein senkrechter Abstand einer Haltelinie zu einem Auftreffpunkt
- a_{R}: der senkrechte Abstand der Haltelinie zur Radarantenne
- P: ein Auftreffpunkt
- v: eine Geschwindigkeit
- α: der Aufstellwinkel
- β: der Öffnungswinkel
- γ: ein Messwinkel

## Patentansprüche

1. Verfahren zur Erfassung und Dokumentation von Verkehrsverstößen an einer Verkehrsampel, bei dem das Passieren von Fahrzeugen eines vorbestimmten Beobachtungsraumes festgestellt wird, indem aus am Fahrzeug reflektierten Radarsignalen eines Radargerätes (1) Entfernungen für jeweilige Auftreffpunkte abgeleitet werden und festgestellt wird, ob sich diese Entfernungen und damit die Auftreffpunkte in dem durch den Beobachtungsraum festgelegten Entfernungsbereich, dessen Relativlage zum Sende- und Empfangsort der Radarstrahlung bekannt ist, befinden, **dadurch gekennzeichnet,**
**dass** die Radarstrahlung des radergeräts im Wesentlichen längs zur Fährbahnrichtung auf mehrere Fahrspuren einer Fahrbann gerichtet wird, wobei die von der Radarstrahfung gebildete Radarkeule einen Beobachtungsraum einschließt, der wenigstens teilweise in Fahrtrichtung vor den Fahrspuren zugeordneten Haltelinien (2) liegt,
**dass** die Relativlage der Haltelinien (2) bezogen auf den Sende- und Empfangsort der Radarstrahlung bestimmt wird,
**dass** die relative Position für innerhalb des Beobachtungsraumes liegende Auftreffpunkte (P), bezogen auf den Sende- und Empfangsort der Radarstrahlung, aus den reflektierten Radarsignalen abgeleitet wird. indem zusätzlich zur Entfernung der Aufheffpunkte (10) deren Winkel (8) zu einer Radarchse des Radargerätes (1) bestimmt wird, wobei die Radarachse diejenige Achse ist, auf der der Winkel (γ) gleich Null ist, und wobei die Radarachse mit der Fahrbahnrichtung einen Aufstellwinkel (α) von kleiner als 45° einschließt, und dass von der relativen Position der Auftreffpunkte (P) auf die Fahrspur geschlossen wird,
**dass** aus der bekannten Relativlage der Haltelinien (2) und den Positionen der Auftreffpunkte (P) jeweils deren senkrechter Abstand (a) zu einer Haltelinie (2) ermittelt wird und den Auftreffpunkten (P) zugeordnet wird,
**dass** aus den Radarsignalen, den Auftreffpunkten (P) zugeordnet, auch die Geschwindigkeit (v) abgeleitet wird,
**dass** jeweils aus einer abgeleiteten Geschwindigkeit (v) und dem senkrechten Abstand des Auftreffpunktes (P) von einer Haltelinie (2) auf den Zeitpunkt des Passierens des Fahrzeuges dieser Haltelinie (2) geschlossen wird und ein Foto ausgelöst wird, wenn dieser Zeitpunkt außerhalb der Grünphase einer der Haltelinie (2) zugeordneten Verkehrsampel (4) liegt.

2. Verfahren nach Anspruch 1, **dadurch gekennzeichnet,**
**dass** die jeweils abgeleitete Geschwindigkeit (v) mit einer für die betreffende Fahrspur vorgegebenen Grenzgeschwindigkeit verglichen wird und auch dann ein Foto ausgelöst wird, wenn die Geschwindigkeit (v) größer der Grenzgeschwindigkeit ist.

3. Verfahren nach Anspruch 1 oder 2, **dadurch gekennzeichnet,**
**dass** aus der abgeleiteten Geschwindigkeit (v) und einem bekannten Abstand einer Haltelinie (2) zu einem Fotofixpunkt der Zeitpunkt des Auslösens wenigstens eines Fotos ermittelt wird.

4. Verfahren nach Anspruch 3, **dadurch gekennzeichnet,**
**dass** der Fotofixpunkt auf einer Haltelinie (2) liegt.

5. Verfahren nach Anspruch 3, **dadurch gekennzeichnet,**
**dass** der Fotofixpunkt in einem 1 Abstand vor einer Haltelinie (2) liegt.

6. Verfahren nach einem der Ansprüche 1 bis 5, **dadurch gekennzeichnet,**
**dass** die Radarstrahlung in einem spitzen Winkel vertikal geneigt zur Fahrbahnoberfläche auf die Fahrspuren gerichtet wird

7. Verfahren nach einem der Ansprüche 1 bis 5, **dadurch gekennzeichnet,**
**dass** die Entfernung zusätzlich durch Impulslaufizeitmessung mittels Laser bestimmt wird.

## Claims

1. A method for detecting and documenting traffic violations at a traffic light in which the passage of vehicles through a predetermined observation area is determined by deriving distances for the respective points of impingement from the radar signals of a radar device (1) that are reflected by the vehicle and by determining whether these distances, and thus the points of impingement, are located within the distance range defined by the observation area, the position of which relative to the transmitting and receiving site of the radar beam is known, **characterised in that**
the radar beam from the radar device is directed, in a substantially longitudinal direction with respect to the direction of the roadway, at several lanes of a roadway, with the radar lobe formed by the radar beam comprising an observation area which, in the direction of travel, is located at least partially before stop lines (2) associated with said lanes,
the relative position of the stop lines (2) is determined relative to the transmitting and receiving site of the radar beam,
the relative position for points of impingement (P) located within the observation area relative to the transmitting and receiving site of the radar beam is derived from the reflected radar signals by determining, in addition to the distance of the points of impingement (P), their angle (γ) to a radar axis of the radar device (1), said radar axis being that axis on which the angle (γ) equals zero and said radar axis enclosing a mounting angle (α) of less than 45° with the direction of the roadway, and by deriving the lane from the relative position of the points of impingement (P), the perpendicular distance (a) from a stop line (2) is determined from the known relative position of the stop lines (2) and the positions of the points of impingement (P) and is linked with the points of impingement (P),
the speed (v) is also derived from the radar signals, linked with the points of impingement (P), and
based on a derived speed (v) and the perpendicular distance of the point of impingement (P) from a stop line (2), the time point at which the vehicle crosses this stop line (2) is determined and an image is triggered if this time point is outside the green-light phase of a traffic light (4) that is associated with the stop line (2).

2. The method according to claim 1, **characterised in that** the respectively derived speed (v) is compared with a cut-off speed specified for the respective lane and an image is triggered even if the speed (v) is higher than the cut-off speed.

3. The method according to claim 1 or 2, **characterised in that**, based on the derived speed (v) and a known distance of a stop line (2) from a fixed image point, the time point at which at least one image is triggered is determined.

4. The method according to claim 3, **characterised in that** the fixed image point is located on a stop line (2).

5. The method according to claim 3, **characterised in that** the fixed image point is located some distance in front of a stop line (2).

6. The method according to any one of claims 1 to 5, **characterised in that** the radar beam is directed at the lanes at an acute angle and inclined perpendicular to the roadway surface.

7. The method according to any one of claims 1 to 5, **characterised in that** the distance is additionally determined by a pulse time measurement by means of a laser.

## Revendications

1. Procédé pour déterminer et documenter des infractions à un feux de signalisation, ce procédé comprenant la détection du passage de véhicules à travers une zone d'observation prédéfinie en dérivant des distances pour des points d'incidence respectives à partir de signaux radar d'un dispositif radar (1) qui sont réfléchis par le véhicule et en déterminant si lesdites distances, et par conséquent les points d'incidence, se trouvent dans la gamme de distances définie par la zone d'observation, dont on connait la position relative par rapport à l'endroit de transmission et de réception du faisceau radar, **caractérisé en ce que**
le faisceau radar du dispositif radar est dirigé, dans une direction sensiblement longitudinale par rapport à la direction de la chaussée, vers plusieurs voies d'une chaussée, le lobe radar formé par le faisceau radar comprenant une zone d'observation qui est disposée au moins partiellement, en direction de marche, avant des lignes d'arrêt (2) associées avec lesdites voies, la position relative des lignes d'arrêt (2) est déterminée par rapport à l'endroit de transmission et de réception du faisceau radar,
la position relative pour des points d'incidence (P), disposés dans la zone d'observation, par rapport à l'endroit de transmission et de réception du faisceau radar est dérivée à partir des signaux radar réfléchis, en déterminant, en plus de la distance des points d'incidence (P), leur angle (γ) avec un axe radar du dispositif radar (1), ledit axe radar étant l'axe sur lequel l'angle (γ) est égale à zéro et ledit axe radar comprenant un angle de montage (α) de moins de 45° avec la direction de la chaussée, et en dérivant la voie à partir de la position relative des points d'incidence (P),
la distance perpendiculaire (a) d'une ligne d'arrêt (2) est déterminée à partir de la position relative connue des lignes d'arrêt (2) et des positions des points d'incidence (P) et est associée avec les points d'incidence (P),
la vitesse (v) est également dérivée des signaux radar associés avec les points d'incidence (P), et,
à partir d'une vitesse dérivée (v) et de la distance perpendiculaire du point d'incidence (P) d'une ligne d'arrêt (2), l'instant auquel le véhicule traverse cette ligne d'arrêt (2) est déterminé et la prise d'un image est déclenchée si cet instant est hors de la phase verte d'un feu de signalisation (4) associé avec ladite ligne d'arrêt (2).

2. Procédé selon la revendication 1, **caractérisé en ce que** chaque vitesse (v) dérivée est comparée à une vitesse limite spécifiée pour ladite voie et la prise d'un image est déclenchée même si ladite vitesse (v) est supérieure à la vitesse limite.

3. Procédé selon la revendication 1 ou 2, **caractérisé en ce que** l'on détermine, à partir de la vitesse dérivée (v) et une distance connue d'une ligne d'arrêt (2) par rapport à un point image fixe, l'instant auquel au moins une prise d'image est déclenchée.

4. Procédé selon la revendication 3, **caractérisé en ce que** ledit point image fixe est disposé sur une ligne d'arrêt (2).

5. Procédé selon la revendication 3, **caractérisé en ce que** ledit point image fixé est disposé à distance avant la ligne d'arrêt (2).

6. Procédé selon l'une quelconque des revendications 1 à 5, **caractérisé en ce que** le faisceau radar est dirigé vers les voies sous un angle aigu et avec une inclinaison perpendiculaire par rapport à la surface de la chaussée.

7. Procédé selon l'une quelconque des revendications 1 à 5, **caractérisé en ce que** la distance est déterminée en plus par la mesure du temps de propagation des impulsions au moyen d'un laser.
